# EUROPÄISCHE PATENTSCHRIFT

(11) **EP 2 020 358 B1**
(45) Veröffentlichungstag und Bekanntmachung des Hinweises auf die Patenterteilung: **26.08.2015**
(21) Anmeldenummer: 08009973.2
(22) Anmeldetag: 30.05.2008
(51) Int. Cl.: B62B 3/06, B62B 5/02

(54) **Hubwagen mit Lastarmen**
Jack lift with lift arm
Chariot élévateur doté de bras de charge

(30) Priorität: 02.08.2007 DE 102007036177
(43) Veröffentlichungstag der Anmeldung: 04.02.2009
(73) Patentinhaber: Linde Material Handling GmbH, 63743 Aschaffenburg (DE)
(72) Erfinder: Queneau, Claude, 86100 Saint Sauveur (FR)
(74) Vertreter: Geirhos, Johann

(56) Entgegenhaltungen:
- EP-A2- 0 903 277
- EP-A2- 1 077 169
- DE-A1- 2 510 586
- US-A1- 2006 232 030

## Beschreibung

Die Erfindung betrifft einen Hubwagen, insbesondere Niederhubwagen, mit einem Antriebsteil und einem relativ zum Antriebsteil vertikal bewegbaren Lastteil, das Lastarme aufweist, die mittels jeweils einer mindestens zwei Lastrollen aufweisenden Lastrolleneinrichtung auf einer Fahrbahn abgestützt sind, wobei die Lastrollen in jeweils einem Lastrollenträger drehbar gelagert sind, der an einem Schwenkarm drehbar gelagert ist, wobei der Schwenkarm zur vertikalen Bewegung der Lastarme relativ zum Antriebsteil schwenkbar an dem Lastarm angeordnet ist, und wobei die Lastrollen in dem Lastrollenträger seitlich versetzt und in Längsrichtung überlagert angeordnet sind.

Ein Hubwagen, bei dem die Lastarme mittels jeweils einer Lastrolleneinrichtung, die zwei Lastrollen aufweist, auf der Fahrbahn abgestützt ist, ist aus der EP 1 077 169 A1 bekannt. Die beiden Lastrollen sind hierbei tandemartig und somit in Längsrichtung des Hubwagens hintereinander angeordnet. Hierdurch ergibt sich ein hoher Bauraumbedarf der Lastrolleneinrichtung in Längsrichtung, der insbesondere das Einfahren des Hubwagens in eine querstehende Palette erschwert, wobei die Lastrollen ein Bodenbrett der Palette überfahren müssen. Zudem ergibt sich aufgrund des hohen Bauraumbedarfs in Längsrichtung der Lastrolleneinrichtung lediglich eine geringe mögliche Schwenkbewegung des Lastrollenträgers relativ zum Schwenkarm, wodurch bei gattungsgemäßen Hubwagen mit tandemartig angeordneten Lastrollen das Überfahren größerer Hindernisse der Fahrbahn nicht ermöglicht wird, da die Lastrollen bzw. der Lastrollenträger mit der Oberseite am Lastarm anschlägt und somit die Lastrollen das Hindernis nicht überwinden können.

Gattungsgemäße Hubwagen, bei denen mehrere Lastrollen in den Lastrollenträgern seitlich versetzt und in Längsrichtung überlagert angeordnet sind, sind aus der US 2006/232030 A1 und der DE 25 10 586 A1 bekannt.

Der vorliegenden Erfindung liegt die Aufgabe zugrunde, einen Hubwagen der eingangs genannten Gattung zur Verfügung zu stellen, mit dem größere Hindernisse überfahren werden können und mit dem das Einfahren in eine querstehende Palette erleichtert wird.

Diese Aufgabe wird in Verbindung mit einer Lastrolleneinrichtung, die jeweils zwei Lastrollen aufweist und in jedem Lastrollenträger zwei Lastrollen angeordnet sind, wobei der der Lastrollenträger mit zumindest einer sich nach oben erstreckenden, bogenförmigen Kontur versehen ist, erfindungsgemäß dadurch gelöst, dass der Lastrollenträger mit mindestens einem die Lastrollen in zumindest einer Fahrtrichtung zumindest teilweise umschließenden Füllkörper versehen ist, der an die bogenförmigen Kontur des Lastrollenträgers angepasst ist, oder der Lastrollenträger mit zumindest einer die Lastrollen in zumindest einer Fahrtrichtung zumindest teilweise umschließenden walzenförmigen Zusatzrolle versehen ist, die im normalen Fahrbetrieb nicht in Kontakt mit Fahrbahn steht und die vor der entsprechenden Lastrolle am oberen Bereich des Lastrollenträger angeordnet ist. Erfindungsgemäß sind die Lastrollen in dem Lastrollenträger seitlich versetzt angeordnet, wodurch ermöglicht wird, die Drehachsen der Lastrollen derart anzuordnen, dass der Abstand der Drehachsen der Lastrollen geringer als der Durchmesser der Lastrollen ist. Hierdurch wird eine überlagerung der Lastrollen in Längsrichtung ermöglicht und somit ein geringer Bauraumbedarf der Lastrolleneinrichtung in Längsrichtung des Hubwagens erzielt. Aufgrund des geringen Platzbedarfs der Lastrolleneinrichtung in Längsrichtung wird das Einfahren des Hubwagens in eine querstehende Palette erleichtert und weiterhin ein vergrößerter Schwenkbereich der Lastrolleneinrichtung relativ zum Schwenkarm ermöglicht, so dass mit dem erfindungsgemäßen Hubwagen weiterhin größere Hindernisse der Fahrbahn sicher und einfach überfahren werden können.

Die bogenförmige Kontur des Lastrollenträgers bildet hierbei ein Kufe, die bei einem Überfahren von größeren Hindernissen der Fahrbahn, beispielsweise eine Bordsteinkante oder eine Bordsteinabsenkung, ein Verschwenken des Lastrollenträgers bewirkt, wodurch der erfindungsgemäße Hubwagen große Hindernisse sicher und einfach überfahren und somit überwinden kann.

Die Füllkörper bilden hierbei einerseits Abweiser, mit denen ein Verklemmen kleinerer, auf der Fahrbahn liegender Gegenstände, beispielsweise von Steinen, zwischen den Lastrollen und dem Lastrollenträger wirksam vermieden werden. Zudem ist mit den Füllkörpern eine Zusatzmasse erzeugbar, die trotz des verringerten Abstandes der Drehachsen der Lastrollen einen ruhigen Lauf der Lastrolleneinrichtungen auf der Fahrbahn ermöglichen und eine verbesserte Stabilität des Hubwagens durch eine tiefe Schwerpunktlage ermöglichen, insbesondere an Steigungen und Gefällen sowie an seitlich geneigten Fahrbahnen.

Besondere Vorteile ergeben sich hierbei, wenn sich die Kontur von einem bodennahen Bereich zu einem bodenfemen Bereich erstreckt, der im Wesentlichen der Höhe der Lastrollen entspricht. Mit der von der Kontur ausgebildeten Kufe können somit auf einfache Weise Hindernisse der Fahrbahn überwunden werden, deren Höhe dem Durchmesser der Lastrollen entsprechen.

In Weiterbildung der Erfindung ist vorgesehen, dass der Lastrollenträger die Lastrollen in beiden Fahrtrichtungen umschließt, wobei der Lastrollenträger für jede Fahrtrichtung mit jeweils einer sich nach oben erstreckenden bogenförmigen Kontur versehen ist. Hierdurch kann auf einfache Weise erzielt werden, dass der Lastrollenträger für jede Fahrtrichtung mit einer von der Kontur gebildeten Kufe versehen ist, wodurch auf einfache Weise mit dem erfindungsgemäßen Hubwagen sowohl in Vorwärtsfahrt als auch in Rückwärtsfahrt größere Hindernisse der Fahrbahn sicher und einfach überwunden werden können.

Gemäß einer bevorzugten Weiterbildung der Erfindung ist an dem Lastrollenträger mindestens ein Anschlag zur Begrenzung der Schwenkbewegung des Lastrollenträgers relativ zum Schwenkarm vorgesehen. Hierdurch kann der maximale Schwenkwinkel des Lastrollenträgers relativ zum Schwenkarm auf einfache Weise begrenzt werden, so dass beim Überfahren eines größeren Hindernisses der Fahrbahn mit der die Funktion einer Kufe aufweisenden Kontur des Lastrollenträgers ein Überfahren des Hindernisses mit der Lastrolleneinrichtung erzielt wird.

Der Anschlag kann mit geringem Bauaufwand gemäß einer bevorzugten Ausgestaltungsform von einem an dem Lastrollenträger angeordneten Anschlagzapfen gebildet werden, der mit dem Schwenkarm in Wirkverbindung bringbar ist

Besondere Vorteile sind erzielbar, wenn gemäß einer Weiterbildung der Erfindung die Zusatzrolle in dem Lastrollenträger im bodenfemen Bereich vor der entsprechenden Lastrolle drehbar gelagert ist. Mit einer derartigen Zusatzrolle, die im normalen Fahrbetrieb nicht in Kontakt mit Fahrbahn steht und die vor der entsprechenden Lastrolle am oberen Bereich des Lastrollenträger angeordnet ist, kann das Überfahren eines größeren Hindernisses, dessen Höhe im Wesentlichen dem Durchmesser der Lastrolle entspricht, erleichtert werden, da die Zusatzrolle mit dem Hindernis in Kontakt gelangt und neben der die Kufe bildenden Kontur eine zusätzliche Kletterhilfe für den Lastrollenträger und somit die Lastrolleneinrichtung bildet.

Die Zusatzrolle ist hierbei zweckmäßigerweise am oberen Ende der bogenförmigen Kontur an dem Lastrollenträger angeordnet. Beim Anfahren an ein größeres Hindernis gelangt somit als erstes die Zusatzrolle in Kontakt mit dem Hindernis und bewirkt ein Verschwenken des Lastrollenträgers, wodurch größere Hindernisse, deren Höhe dem Durchmesser der Lastrollen entspricht, sicher und einfach überfahren werden können.

Sofern für jede Fahrtrichtung eine Zusatzrolle vorgesehen ist, kann mit geringem Bauaufwand für beide Fahrtrichtungen eine von der Zusatzrolle gebildete Kletterhilfe erzielt werden.

Zweckmäßigerweise ist die Schwenkachse des Lastrollenträgers im Schwenkarm mittig zwischen den Drehachsen der Lastrollen angeordnet.

Die Aufgabe wird ebenfalls erfindungsgemäß dadurch gelöst, dass die Lastrolleneinrichtung jeweils drei Lastrollen auf, wobei in jedem Lastrollenträger drei Lastrollen sternförmig angeordnet sind. Durch eine derartige sternförmige Anordnung von drei Lastrollen können ebenfalls mit dem erfindungsgemäßen Hubwagen größere Hindernisse der Fahrbahn, beispielsweise eine Bordsteinkante oder eine Bordsteinabsenkung, sicher und einfach überfahren und somit überwinden kann. Der Lastrollenträger mit den drei sternförmig angeordneten Lastrollen ist hierbei in dem Schwenkarm um 360° drehbar gelagert, so dass bei einem größeren Hindernis, dessen Höhe in etwa dem Durchmesser der Lastrollen entspricht, der Lastrollenrollenträger beim Überfahren des Hindernisses um 120° verschwenkt wird, wodurch das Hindernis sicher und einfach überfahren und somit überwunden werden kann.

Ein einfacher Aufbau ist hierbei erzielbar, wenn der Lastrollenträger im Wesentlichen mit einer dreiecksförmigen Kontur versehen ist, wobei die Drehachsen der Lastrollen als gleichseitiges Dreieck angeordnet sind. Bei einer derartigen Anordnung der Lastrollen an den Spitzen eines gleichseitigen Dreiecks kann auf einfache Weise eine sternförmige Anordnung der drei Lastrollen erzielt werden.

Die Drehachse des Lastrollenträgers im Schwenkarm weist hierbei gemäß einer bevorzugten Ausgestaltungsform der Erfindung von den Drehachsen der Lastrollen jeweils gleichen Abstand auf. Hierdurch kann auf einfache Weise eine sternförmige Anordnung der Lastrollen erzielt werden, wobei die Lastrollen bezüglich der Drehachse des Lastrollenträgers jeweils einen Winkel von 120° aufweisen. Mit einer derartigen Anordnung der Lastrollen können größere Hindernisse in beiden Fahrtrichtungen auf einfache Weise überwunden werden.

Sofern die Lastarme im Bereich der Lastrolleneinrichtung jeweils nach oben offen ausgebildet sind, kann ein großer Schwenkbereich der Lastrollenträger zugelassen und somit können größere Hindernisse der Fahrbahn auf einfache Weise überfahren werden.

Weitere Vorteile und Einzelheiten der Erfindung werden anhand der in den schematischen Figuren dargestellten Ausführungsbeispiele näher erläutert. Hierbei zeigt
- Figur 1: einen erfindungsgemäßen Hubwagen in einer perspektivischen Darstellung,
- Figur 2a, 2b: eine Lastrolleneinrichtung gemäß einer ersten Ausführungsform der Erfindung,
- Figur 3a, 3b: eine Lastrolleneinrichtung gemäß einer zweiten Ausführungsform der Erfindung,
- Figuren 4a bis: 4e einen Hubwagen mit Lastrolleneinrichtungen gemäß den Figuren 2a, 2b bzw. 3a, 3b beim Überfahren eines Hindernisses,
- Figuren 5a bis 5d: eine Lastrolleneinrichtung gemäß einer dritten Ausführungsform der Erfindung,
- Figuren 6a bis 6d: einen Hubwagen mit einer Lastrolleneinrichtung gemäß den Figuren 5a bis 5b beim Überfahren eines Hindernisses.

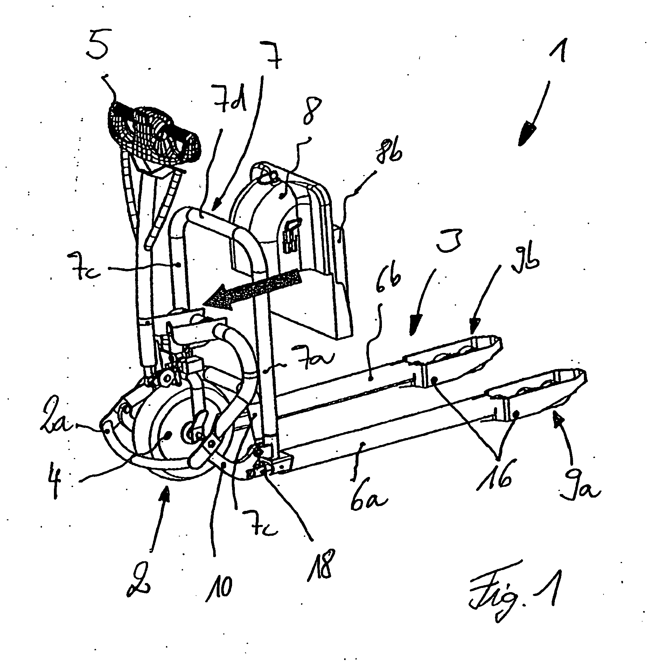

In der Figur 1 ist ein erfindungsgemäßer, als Niederhubwagen ausgebildeter Hubwagen 1 mit einem Antriebsteil 2 und einem Lastteil 3 dargestellt. Der Antriebsteil 2 umfasst einen bügelförmigen Rahmenabschnitt 2a, an dem eine Fahrantriebseinheit 4, die ein Antriebsrad und einen das Antriebsrad antreibenden Fahrmotor umfasst, lenkbar angeordnet ist. Das Lenken des Hubwagens 1 erfolgt mittels einer mit der Fahrantriebseinheit 4 verbundenen Deichsel 5. Das Antriebsrad der Fahrantriebseinheit 4 ist hierbei als luftbereiftes Antriebsrad ausgebildet.

Zum Lastteil 3 gehören zwei Lastarme 6a, 6b, mit denen Lasten, beispielsweise Paletten, Gitterboxen oder Kleinteilebehälter aufgenommen, angehoben und transportiert werden können. An dem dem Antriebsteil 2 zugewandten Bereich des Lastteils 3 ist am Lastteil 3 ein vertikaler Bügelabschnitt 7 angeordnet, der von seitlichen Längsbügeln 7a, 7b, einem unteren Querbügel 7c und einem oberen Querbügel 7d gebildet ist.

Der bügelförmige Rahmenabschnitt 2a des Antriebsteils 2 und der von den Lastarmen 6a, 6b sowie dem Bügelabschnitt 7 gebildete Lastteil 3 ist im Wesentlichen von einstückigen Hohlprofilen mit einem geschlossenen Querschnitt gebildet.

Der Bügelabschnitt 7 dient zur Aufnahme eines Gehäuses 8, das mit einem Batteriefach für eine Batterie 8b versehen ist und in dem weitere elektrische bzw. elektronische Komponenten eines elektrischen Antriebssystems des Hubwagens 1 angeordnet sind.

Der Lastteil 3 ist an dem Antriebsteil 2 mittels einer von Gelenkhebeln 10 gebildeten Hebelanordnung in vertikaler Richtung bewegbar angeordnet. Hierzu ist eine nicht mehr dargestellte, beispielsweise als Hydraulikzylinder ausgebildete Hubeinrichtung vorgesehen, der zwischen dem Antriebsteil 2 und dem Lastteil 3 angeordnet ist und eine auf den Lastteil 3 wirkende Hubbewegung erzeugt. Der Lastteil 3 stützt sich mittels jeweils Lastrolleneinrichtung 9a, 9b auf einer Fahrbahn ab, die jeweils an den lastseitigen Enden der Lastarme 6a, 6b angeordnet sind. Im Bereich der Lastrolleneinrichtung 9a, 9b sind die Lastarme 6a, 6b nach oben offen ausgebildet.

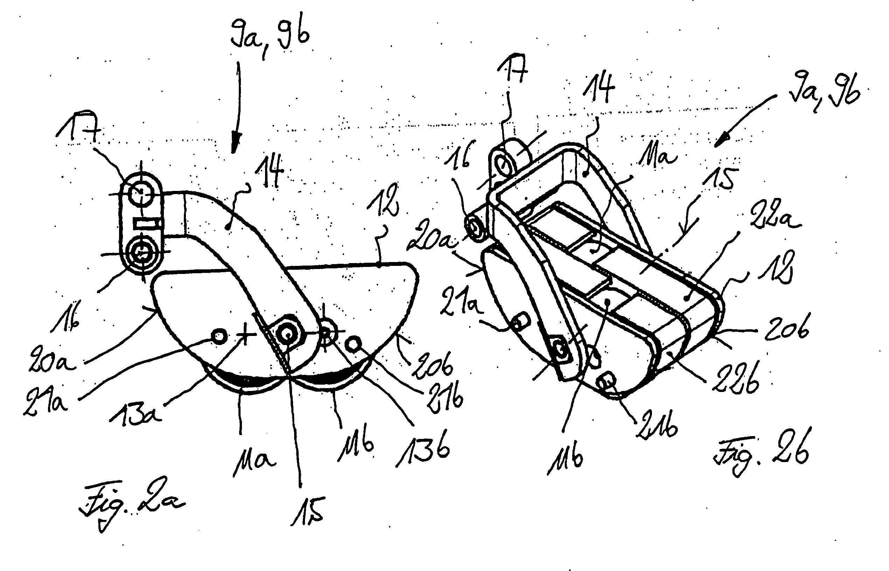

In den Figuren 2a und 2b ist eine erste Ausführungsform einer erfindungsgemäßen Lastrolleneinrichtung 9a, 9b dargestellt, wobei in der Figur 2a eine Seitenansicht der Lastrolleneinrichtung 9a, 9b dargestellt ist und die Figur 2b eine perspektivische Darstellung der Lastrolleneinrichtung 9a, 9b zeigt.

Jede Lastrolleneinrichtung 9a, 9b weist zwei, in Längsrichtung hintereinander angeordnete Lastrollen 11a, 11b auf, die in einem Lastrollenträger 12 mittels jeweils einer Drehachse 13a bzw. 13b drehbar gelagert sind. Der Lastrollenträger 12 ist an einem bügelförmigen Schwenkarm 14 mittels einer Drehachse 15 drehbar gelagert. Die Drehachse 15 ist hierbei mittig bezüglich der Drehachsen 13a, 13b angeordnet. Der Schwenkarm 14 ist an dem entsprechenden Lastarm 6a bzw. 6b mittels einer Schwenkachse 16 schwenkbar gelagert. An einer weiteren Achse 17 des Schwenkarmes 14 ist eine beispielsweise als Druckstange ausgebildete Stange 18 gelenkig angelenkt, die innerhalb der Lastarme 6a, 6b angeordnet ist und mit dem anderen Ende mit dem Gelenkhebel 10 in Wirkverbindung steht.

Eine Hubbewegung der Hubeinrichtung kann somit mittels der Gelenkhebel 10 und der Stangen 18 in eine Schwenkbewegung der Schwenkhebel 14 und somit eine vertikale Bewegung der Lastrollen 11a, 11b umgewandelt werden, wodurch der Lastteil 3 relativ zum Antriebsteil 2 angehoben bzw. abgesenkt werden kann. Die Stangen 18 können hierbei ebenfalls als Zugstangen ausgebildet werden.

Der Abstand der Drehachsen 13a, 13b der Lastrollen 11a, 11b ist hierbei geringer als der Durchmesser der Lastrollen 11a, 11b, so dass die Lastrollen 11a, 11b - wie aus der Figur 2b ersichtlich ist - im Lastrollenträger 12 seitlich versetzt und in Längsrichtung überlagert angeordnet sind.

Der Lastrollenträger 12 umschließt hierbei in Längsrichtung gesehen die Lastrollen 11a, 11b an der Vorderseite und der Rückseite und ist an beiden Seiten und somit für jede Fahrtrichtung mit jeweils einer sich nach oben erstreckenden, bogenförmigen Kontur 20a, 20b versehen.

Die bogenförmige Kontur 20a, 20b erstreckt sich hierbei von einem unteren, bodennahen Bereich bis zu einem oberen, bodenfernen Bereich, der im Wesentlichen der Höhe der Lastrollen 11a, 11b entspricht.

Zur Begrenzung der Schwenkbewegung des Lastrollenträgers 12 relativ zum Schwenkarm 14 ist ein von zwei Anschlagzapfen 21a, 21b gebildeter Anschlag vorgesehen. Die Anschlagzapfen 21a, 21 b sind hierbei an einer Seitenplatte des Lastrollenträgers 12 angeordnet und gelangen beim Verschwenken des Lastrollenträgers 12 mit dem Schwenkarm 14 in Wirkverbindung.

Im Lastrollenträger 12 sind zudem Füllkörper 22a, 22b angeordnet und befestigt, die die entsprechende Lastrolle 11a, 11b teilweise umschließen und an die Kontur des Lastrollenträgers 12 angepasst sind.

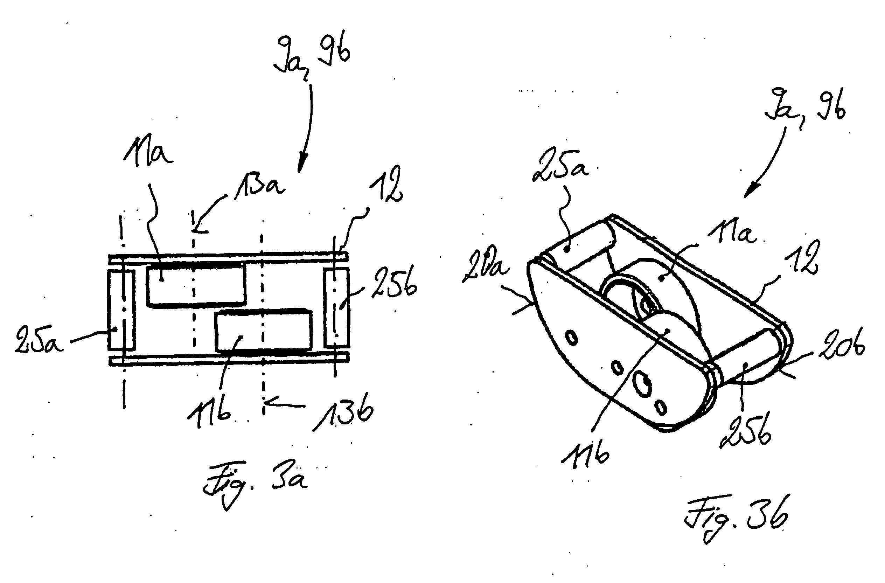

In den Figuren 3a und 3b ist eine weitere Ausführungsform einer erfindungsgemäßen Lastrolleneinrichtung 9a, 9b dargestellt, die im Wesentlichen der in den Figuren 2a, 2b dargestellten Lastrolleneinrichtung 9a, 9b entspricht. Die Figur 3a zeigt hierbei eine Ansicht von oben und die Figur 3b eine perspektivische Darstellung der Lastrolleneinrichtung 9a, 9b.

Der Lastrollenträger 12, in dem die beiden Lastrollen 11a, 11b wie bei der Ausführungsform gemäß den Figuren 2a und 2b seitlich versetzt und in Längsrichtung überlagert angeordnet sind, ist mit walzenförmigen Zusatzrollen 25a, 25b versehen, die im Lastrollenträger 12 im bodenfernen Bereich drehbar angeordnet sind. Die Zusatzrolle 25a ist hierbei im oberen Bereich der bogenförmigen Kontur 20a angeordnet und befindet sich in Längsrichtung vor der Lastrolle 11a. Die Zusatzrolle 25b befindet sich am oberen Bereich der bogenförmigen Kontur 25b und ist in Längsrichtung vor der Lastrolle 25b angeordnet.

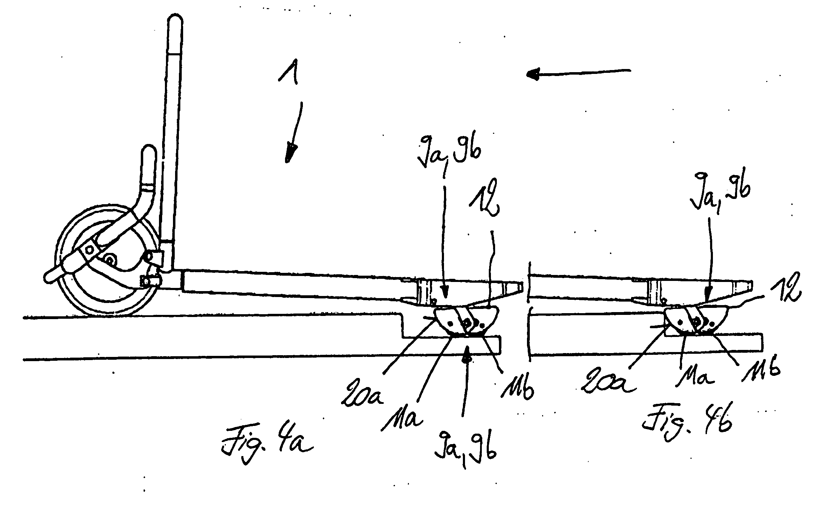

In den Figuren 4a bis 4e ist ein mit den Lastrolleneinrichtungen 9a, 9b gemäß den Figuren 2a, 2b bzw. 3a, 3b ausgerüsteter Hubwagen 1 beim Überfahren eines größeren Hindernisses dargestellt, beispielsweise einer Bordsteinkante, die ein Höhe von ca. 70mm aufweist, die im Wesentlichen dem Durchmesser der Lastrollen 11a, 11b entspricht.

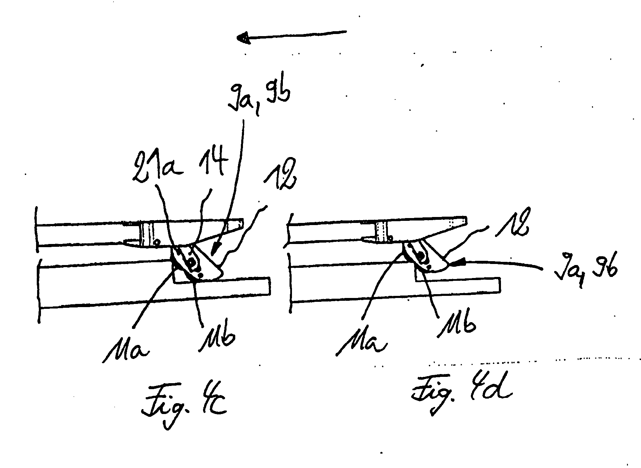

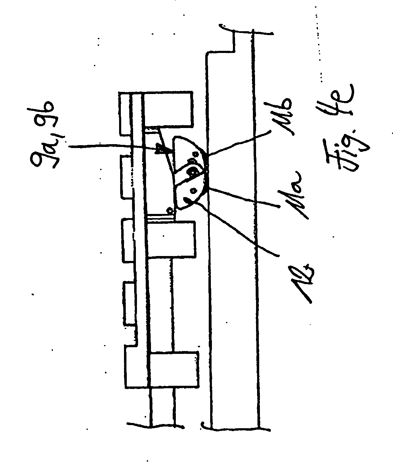

Bewegt sich der erfindungsgemäße Hubwagen 1 ausgehend von der in der Figur 4a dargestellten Stellung in Fahrtrichtung nach links, gelangt die Lastrolleneinrichtung 9a, 9b - wie in Figur 4b dargestellt ist - mit dem oberen, bodenfernen Bereich der in Fahrtrichtung vorne liegenden bogenförmigen Kontur 20a des Lastrollenträgers 12 an die Bordsteinkante. Bei einer weiteren Bewegung des Hubwagens nach links gleitet der Lastrollenträger 12 mittels der bogenförmigen Kontur 20a, die an der Unterseite des Lastrollenträgers 12 eine Kufe bildet, entlang der Bordsteinkante, wobei der Lastrollenträger 12 um die Drehachse 15 im Uhrzeigersinn verschwenkt wird. Mit der Zusatzrolle 25a gemäß den Figuren 3a, 3b kann hierbei das Verschwenken des Lastrollenträgers 12 erleichtert werden. Bei dem in der Figur 4c dargestellten Zustand gelangt die in Fahrtrichtung vorne liegende Lastrolle 11a in Anlage an die Bordsteinkante. Der Anschlagzapfen 21a gelangt hierbei weiterhin in Anlage an den Schwenkarm 14, wodurch die Schwenkbewegung des Lastrollenträgers 12 begrenzt wird und die Lastrolle 11a entlang der Bordsteinkante abrollt, bis die in Fahrtrichtung hinten liegende Lastrolle 11b - wie in Figur 4d dargestellt ist - mit der Bordsteinkante in Wirkverbindung gelangt und an der Bordsteinkante abrollt. Bei einer weiteren Bewegung des Hubwagens nach links gelangt der Hubwagen in die in der Figur 4e dargestellte Stellung, in der Lastrollenträger 12 in die Ausgangslage zurückgeschwenkt ist und beide Lastrollen 11a, 11b die Bordsteinkante überwunden haben.

Wie aus der Figur 4e weiter ersichtlich ist, wird bei dem erfindungsgemäßen Hubwagen durch die seitlich versetzte und in Längsrichtung überlagerte Anordnung der Lastrollen 11a, 11b ein geringer Bauraumbedarf der Lastrolleneinrichtung 9a, 9b in Längsrichtung erzielt, wodurch weiterhin das Ein- und Ausfahren in eine quer stehende Palette 26 und deren Transport erleichtert wird.

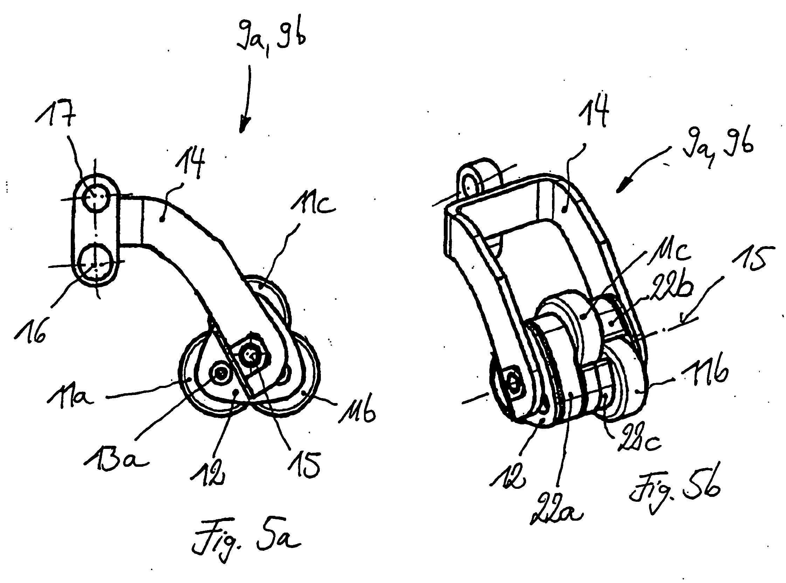

In den Figuren 5a bis 5d ist eine weitere Ausführungsform einer erfindungsgemäßen Lastrolleneinrichtung 9a, 9b dargestellt. Innerhalb des in der Figur 5a dargestellten Schwenkhebels 14, der an der Achse 16 am Lastarm schwenkbar gelagert ist und an dem an der Achse 17 die beispielsweise als Druckstange ausgebildete Stange 18 angreift, ist ein Lastrollenträger 12 um die Drehachse 15 um 360° drehbar gelagert, an dem drei seitlich versetzt und in Längsrichtung überlagert angeordnete Lastrollen 11a, 11b und 11c sternförmig angeordnet sind.

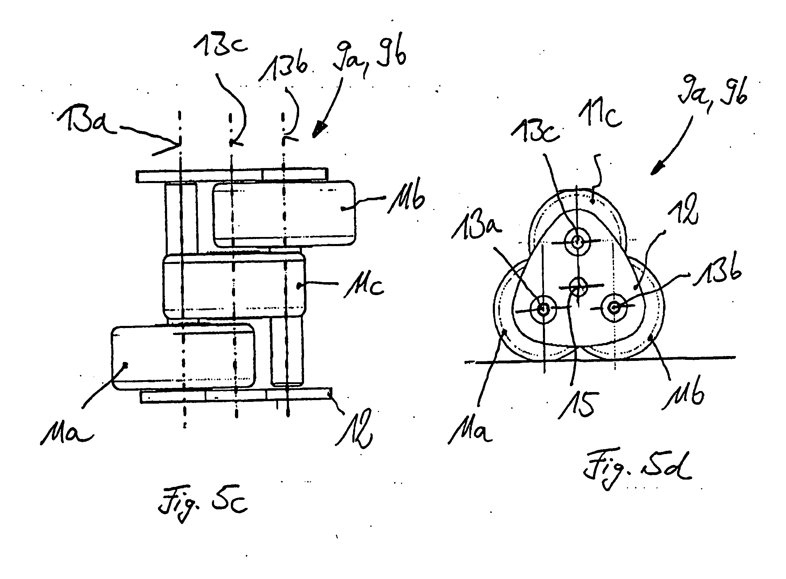

Die Lastrolle 11a ist hierbei - wie aus der Figur 5c ersichtlich ist, in der eine Draufsicht auf die Lastrolleneinrichtung 9a, 9b dargestellt ist - um eine Drehachse 13a im Lastrollenträger 12 gelagert. Entsprechend ist die Lastrolle 11b um eine Drehachse 13b und die Lastrolle 13c um eine Drehachse 13c drehbar gelagert, wobei der Abstand der Drehachsen 13a und 13b zwischeneinander geringer als der Durchmesser der Lastrollen 11a, 11b, 11c ist und somit die Lastrollen 11a, 11b und 11c überlagert angeordnet sind. In Längsrichtung gesehen ist die Drehachse 13c mittig zwischen den Drehachsen 13a und 13b angeordnet.

Der Abstand der Drehachse 13a von der Drehachse 13c ist hierbei derart gewählt, dass die Drehachse 13a innerhalb des Durchmessers der Lastrolle 11c und entsprechend die Drehachse 13c innerhalb des Durchmessers der Lastrolle 11 a liegt. Entsprechend ist der Abstand der beiden Drehachsen 13c und 13b derart gewählt, dass die Drehachse 13c innerhalb des Durchmessers der Lastrolle 11b und die Drehachse 13b innerhalb des Durchmessers der Lastrolle 11c liegt. Hierdurch wird erzielt, dass die Lastrolle 11a überlagert zu den Lastrollen 11b und 11c, die Lastrolle 11b überlagert zu den Lastrollen 11a und 11c und die Lastrolle 11c überlagert zu den Lastrollen 11a und 11b angeordnet ist.

Die Lastrollen 11a, 11b, 11c sind hierbei - wie in der Figur 5d dargestellt ist - in einem im Wesentlichen dreiecksförmigen Lastrollenträger 12 angeordnet, wobei die Drehachsen 13a, 13b, 13c der Lastrollen 11a, 11b, 11c an den Spitzen eines gleichseitigen Dreiecks angeordnet sind. Die Drehachse 15 des Lastrollenträgers 12 im Schwenkarm 14 weist hierbei von den Drehachsen 13a, 13b und 13c jeweils gleichen Abstand auf. Hierdurch wird erzielt, dass die Lastrollen 11a, 11b, 11c bezüglich der Drehachse 15 um jeweils einen Drehwinkel von 120° angeordnet sind.

Wie aus der Figur 5b ersichtlich ist, können Füllkörper 22a, 22b und 22c vorgesehen werden, die die entsprechende Lastrolle 11a, 11b und 11c teilweise umschließen und an die dreiecksförmige Kontur des Lastrollenträgers 12 angepasst sind.

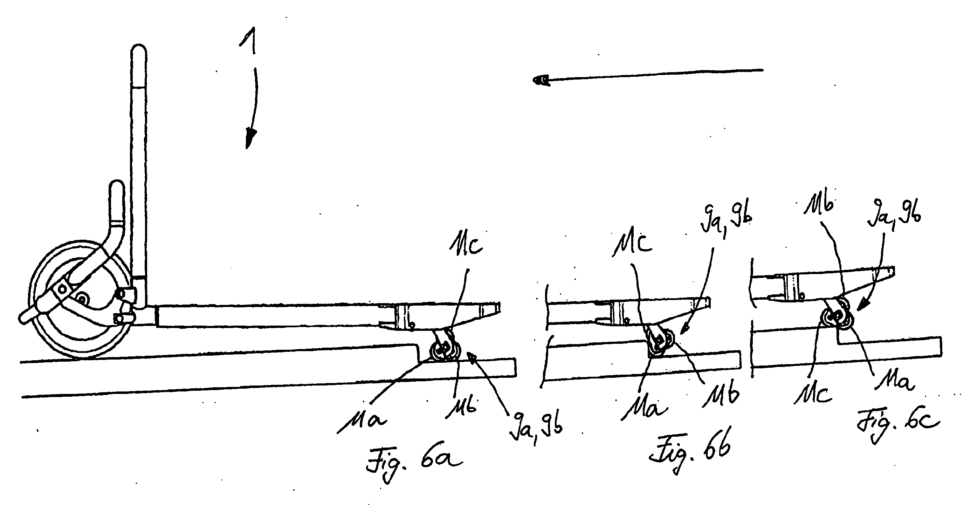

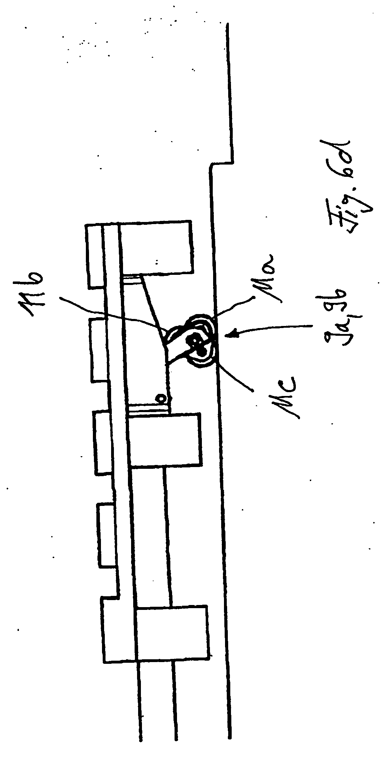

Die Figuren 6a bis 6d zeigen einen mit Lastrolleneinrichtungen 9a, 9b gemäß den Figuren 5a bis 5d ausgerüsteten Hubwagen 1 beim Überfahren eines beispielsweise als Bordsteinkante ausgebildeten größeren Hindernisses, dessen Höhe dem Durchmesser der Lastrollen entspricht. Bewegt sich der erfindungsgemäße Hubwagen 1 ausgehend von der in der Figur 6a dargestellten Stellung, wobei sich der Lastteil mit den Lastrollen 11a, 11b auf der Fahrbahn abstützt, in Fahrtrichtung nach links in Richtung der Bordsteinkante gelangt die Lastrolleneinrichtung 9a, 9b - wie in Figur 6b dargestellt ist - mit der in Fahrtrichtung vorne liegenden Lastrolle 11a an die Bordsteinkante. Bei der weiteren Bewegung des Hubwagens nach links wird der Lastrollenträger 12 um die Drehachse 15 entgegen dem Uhrzeigersinn gedreht, wodurch die Lasstrolle 11c - wie in Figur 6b dargestellt ist - in Kontakt mit der Bordsteinkante gelangt. Bei einer weiteren Bewegung des Hubwagens 1 nach links wird der Lastrollenträger 12 weiter entgegen dem Uhrzeigersinn um die Drehachse 15 gedreht, bis die nunmehr in Fahrtrichtung hinten liegende Lastrolle 11a - wie in Figur 6c dargestellt ist - mit der Bordsteinkante in Wirkverbindung gelangt und an der Bordsteinkante abrollt. Bei einer weiteren Bewegung des Hubwagens nach links gelangt der Hubwagen in die in der Figur 6d dargestellte Stellung, in der der Hubwagen die Bordsteinkante überwunden hat und mit den Lastrollen 11c und 11a auf der Fahrbahn abgestützt ist. Der Lastrollenträger 12 befindet sich hierbei gegenüber der in der Figur 6a dargestellten Stellung in einer um einen Drehwinkel von 120° gedrehten Position. Wie aus der Figur 6d weiter ersichtlich ist, kann mit dem erfindungsgemäßen Hubwagen 1 aufgrund der in Längsrichtung kompakt bauenden Lastrolleneinrichtungen 9a, 9b eine quer stehende Palette einfach unterfahren und transportiert werden.

Der erfindungsgemäße Hubwagen 1 ist besonders für Anwendungen außerhalb von Lagerhallen und Produktionsbetrieben geeignet, bei denen eine unebene Fahrbahnoberfläche gegeben ist, beispielsweise auf Straßen und Plätzen, da durch die erfindungsgemäßen Lastrolleneinrichtungen 9a, 9b in Verbindung mit einer ein luftbereiftes Antriebsrad aufweisenden Fahrantriebseinheit größere Hindernisse der Fahrbahn, beispielsweise Bordsteinkanten und Bordsteinabsenkungen, deren Höhe dem Durchmesser der Lastrollen entspricht oder übersteigt, einfach und sicher überwunden werden können.

## Patentansprüche

1. Hubwagen (1), insbesondere Niederhubwagen, mit einem Antriebsteil (2) und einem relativ zum Antriebsteil (2) vertikal bewegbaren Lastteil (3), der Lastarme (6a; 6b) aufweist, die mittels jeweils einer mindestens zwei Lastrollen (11a; 11b; 11c) aufweisenden Lastrolleneinrichtung (9a; 9b) auf einer Fahrbahn abgestützt sind, wobei die Lastrollen (11a; 11 b; 11 c) in jeweils einem Lastrollenträger (12) drehbar gelagert sind, der an einem Schwenkarm (14) drehbar gelagert ist, wobei der Schwenkarm (14) zur vertikalen Bewegung der Lastarme (6a; 6b) relativ zum Antriebsteil (2) schwenkbar an dem Lastarm (6a; 6b) angeordnet ist, und wobei die Lastrollen (11a; 11b; 11c) in dem Lastrollenträger (12) seitlich versetzt und in Längsrichtung überlagert angeordnet sind, wobei die Lastrolleneinrichtung (9a; 9b) jeweils zwei Lastrollen (11 a; 11 b) aufweist und in jedem Laströllenträger (12) zwei Lastrollen angeordnet (11a; 11b) sind, wobei der Lastrollenträger (12) mit zumindest einer sich nach oben erstreckenden, bogenförmigen Kontur (20a; 20b) versehen ist, **dadurch gekennzeichnet, dass** der Lastrollenträger (12) mit mindestens einem die Lastrollen (11 a; 11 b) in zumindest einer Fahrtrichtung zumindest teilweise umschließenden Füllkörper (22a: 22b) versehen ist, der an die bogenförmigen Kontur (20a; 20b) des Lastrollenträgers (12) angepasst ist, oder der Lastrollenträger (12) mit zumindest einer die Lastrollen (11 a; 11b) in zumindest einer Fahrtrichtung zumindest teilweise umschließenden walzenförmigen Zusatzrolle (25a; 25b) versehen ist, die Im normalen Fahrbetrieb nicht in Kontakt mit Fahrbahn steht und die vor der entsprechenden Lastrolle (11a; 11b) am oberen Bereich des Lastrollenträger (12) angeordnet ist.

2. Hubwagen nach Anspruch 1, **dadurch gekennzeichnet, dass** sich die Kontur (20a; 20b) von einem bodennahen Bereich zu einem bodenfemen Bereich erstreckt, der im Wesentlichen der Höhe der Lastrollen (11a; 11b) entspricht.

3. Hubwagen nach Anspruch 1 oder 2, **dadurch gekennzeichnet, dass** der Lastrollenträger (12) die Lastrollen (11 a; 11 b) in beiden Fahrtrichtungen umschließt, wobei der Lastrollenträgers (12) für jede Fahrtrichtung mit jeweils einer sich nach oben erstreckenden bogenförmige Kontur (20a, 20b) versehen ist.

4. Hubwagen nach einem der Ansprüche 1 bis 3, **dadurch gekennzeichnet, dass** an dem Lastrollenträger (12) mindestens ein Anschlag zur Begrenzung der Schwenkbewegung des Lastrollenträgers (12) relativ zum Schwenkarm (14) vorgesehen ist.

5. Hubwagen nach Anspruch 4, **dadurch gekennzeichnet, dass** der Anschlag von zumindest einem an dem Lastrollenträger (12) angeordneten Anschlagzapfen (21a; 21b) gebildet ist, der mit dem Schwenkarm (14) in Wirkverbindung bringbar ist.

6. Hubwagen nach einem der Ansprüche 1 bis 5, **dadurch gekennzeichnet, dass** die Zusatzrolle (25a; 25b) in dem Lastrollenträger (12) im bodenfernen Bereich vor der entsprechenden Lastrolle (11a; 11b) drehbar gelagert ist.

7. Hubwagen nach Anspruch 6, **dadurch gekennzeichnet, dass** die Zusatzrolle (25a; 25b) am oberen Ende der bogenförmigen Kontur (20a: 20b) an dem Lastrollenträger (12) angeordnet ist.

8. Hubwagen nach Anspruch 6 oder 7, **dadurch gekennzeichnet, dass** für jede Fahrtrichtung eine Zusatzrolle (25a; 25b) vorgesehen ist.

9. Hubwagen nach einem der Ansprüche 1 bis 8, **dadurch gekennzeichnet, dass** die Schwenkachse (15) des Lastrollenträgers (12) im Schwenkarm (14) mittig zwischen den Drehachsen (13a; 13b) der Lastrollen (11a; 11b) angeordnet ist.

10. Hubwagen (1), insbesondere Niederhubwagen, mit einem Antriebsteil (2) und einem relativ zum Antriebsteil (2) vertikal bewegbaren Lastteil (3), der Lastarme (6a; 6b) aufweist, die mittels jeweils einer mindestens zwei Lastrollen (11a; 11b; 11c) aufweisenden Lastrolleneinrichtung (9a; 9b) auf einer Fahrbahn abgestützt sind, wobei die Lastrollen (11a; 11b; 11c) in jeweils einem Lastrollenträger (12) drehbar gelagert sind, der an einem Schwenkarm (14) drehbar gelagert ist, wobei der Schwenkarm (14) zur vertikalen Bewegung der Lastarme (6a; 6b) relativ zum Antriebsteil (2) schwenkbar an dem Lastarm (6a; 6b) angeordnet ist, und wobei die Lastrollen (11a; 11b; 11c) In dem Lastrollenträger (12) seitlich versetzt und in Längsrichtung überlagert angeordnet sind, **dadurch gekennzeichnet, dass** die Lastrolleneinrichtung (9a; 9b) jeweils drei Lastrollen (11a; 11b; 11c) aufweist, wobei in jedem Lastrollenträger(12) drei Lastrollen (11a; 11b; 11c) sternförmig angeordnet sind.

11. Hubwagen nach Anspruch 10, **dadurch gekennzeichnet, dass** der Lastrollenträger (12) im Wesentlichen mit einer dreiecksförmigen Kontur versehen ist, wobei die Drehachsen (13a; 13b; 13c) der Lastrollen (11a; 11b; 11c) als gleichseitiges Dreieck angeordnet sind.

12. Hubwagen nach Anspruch 11, **dadurch gekennzeichnet, dass** die Drehachse (15) des Lastrollenträgers (12) im Schwenkarm (14) von den Drehachsen (13a; 13b; 13c) der Lastrollen (11a; 11 b; 11 c) jeweils gleichen Abstand aufweist.

13. Hubwagen nach ein em der vorangegangenen Ansprüche, **dadurch gekennzeichnet, dass** die Lastarme (6a; 6b) im Bereich der Lastrolleneinrichtung (9a; 9b) jeweils nach oben offen ausgebildet sind.

## Claims

1. Lift truck (1), in particular low-lift truck, with a drive part (2) and a load part (3) which is moveable vertically relative to the drive part (2) and has load arms (6a; 6b) which are supported on a carriageway by means of in each case one load roller device (9a; 9b) having at least two load rollers (11a; 11b; 11c), wherein the load rollers (11a; 11b; 11c) are mounted rotatably each in one load roller carrier (12) which is mounted rotatably on a pivot arm (14), wherein the pivot arm (14) is arranged pivotably on the load arm (6a; 6b) for the vertical movement of the load arms (6a; 6b) relative to the drive part (2), and wherein the load rollers (11a; 11b; 11c) are arranged in the load roller carrier (12) in a manner offset laterally and superimposed in the longitudinal direction, wherein the load roller device (9a; 9b) in each case has two load rollers (11a; 11b), and two load rollers (11a; 11b) are arranged in each load roller carrier (12), wherein the load roller carrier (12) is provided with at least one upwardly extending, arcuate contour (20a; 20b), **characterized in that** the load roller carrier (12) is provided with at least one filling body (22a; 22b) which at least partially surrounds the load rollers (11a; 11b) in at least one direction of travel and is adapted to the arcuate contour (20a; 20b) of the load roller carrier (12), or the load roller carrier (12) is provided with at least one cylindrical additional roller (25a; 25b) which at least partially surrounds the load rollers (11a; 11b) in at least one direction of travel and which, during the normal driving mode, is not in contact with the carriageway and which is arranged on the upper region of the load roller carrier (12) in front of the corresponding load roller (11a; 11b).

2. Lift truck according to Claim 1, **characterized in that** the contour (20a; 20b) extends from a region in the vicinity of the ground to a region which is remote from the ground and substantially corresponds to the height of the load rollers (11a; 11b).

3. Lift truck according to Claim 1 or 2, **characterized in that** the load roller carrier (12) surrounds the load rollers (11a; 11b) in both directions of travel, wherein the load roller carrier (12) is provided with a respective, upwardly extending, arcuate contour (20a, 20b) for each direction of travel.

4. Lift truck according to one of Claims 1 to 3, **characterized in that** at least one stop for limiting the pivoting movement of the load roller carrier (12) relative to the pivot arm (14) is provided on the load roller carrier (12).

5. Lift truck according to Claim 4, **characterized in that** the stop is formed by at least one stop pin (21a; 21b) which is arranged on the load roller carrier (12) and can be brought into operative connection with the pivot arm (14).

6. Lift truck according to one of Claims 1 to 5, **characterized in that** the additional roller (25a; 25b) is mounted rotatably in the load roller carrier (12) in front of the corresponding load roller (11a; 11b) in the region remote from the ground.

7. Lift truck according to Claim 6, **characterized in that** the additional roller (25a; 25b) is arranged on the load roller carrier (12) at the upper end of the arcuate contour (20a; 20b).

8. Lift truck according to Claim 6 or 7, **characterized in that** an additional roller (25a; 25b) is provided for each direction of travel.

9. Lift truck according to one of Claims 1 to 8, **characterized in that** the pivot axis (15) of the load roller carrier (12) is arranged centrally in the pivot arm (14) between the axes of rotation (13a; 13b) of the load rollers (11a; 11b).

10. Lift truck (1), in particular low-lift truck, with a drive part (2) and a load part (3) which is moveable vertically relative to the drive part (2) and has load arms (6a; 6b) which are supported on a carriageway by means of in each case one load roller device (9a; 9b) having at least two load rollers (11a; 11b; 11c), wherein the load rollers (11a; 11b; 11c) are mounted rotatably each in one load roller carrier (12) which is mounted rotatably on a pivot arm (14), wherein the pivot arm (14) is arranged pivotably on the load arm (6a; 6b) for the vertical movement of the load arms (6a; 6b) relative to the drive part (2), and wherein the load rollers (11a; 11b; 11c) are arranged in the load roller carrier (12) in a manner offset laterally and superimposed in the longitudinal direction, **characterized in that** the load roller device (9a; 9b) in each case has three load rollers (11a; 11b; 11c), wherein three load rollers (11a; 11b; 11c) are arranged in a starshaped manner in each load roller carrier (12).

11. Lift truck according to Claim 10, **characterized in that** the load roller carrier (12) is substantially provided with a triangular contour, wherein the axes of rotation (13a; 13b; 13c) of the load rollers (11a; 11b; 11c) are arranged in the form of an equilateral triangle.

12. Lift truck according to Claim 11, **characterized in that** the axis of rotation (15) of the load roller carrier (12) is in each case at the same distance in the pivot arm (14) from the axes of rotation (13a; 13b; 13c) of the load rollers (11a; 11b; 11c).

13. Lift truck according to one of the preceding claims, **characterized in that** the load arms (6a; 6b) are in each case designed to be open upwards in the region of the load roller device (9a; 9b).

## Revendications

1. Chariot élévateur (1), en particulier chariot élévateur à faible levée, comprenant une partie d'entraînement (2) et une partie de charge (3) déplaçable verticalement par rapport à la partie d'entraînement (2), laquelle présente des bras de charge (6a ; 6b) qui sont supportés sur une voie de conduite au moyen d'un dispositif de rouleaux de charge (9a ; 9b) respectif présentant au moins deux rouleaux de charge (11a ; 11b ; 11c), les rouleaux de charge (11a ; 11b ; 11c) étant supportés de manière rotative dans un support de rouleaux de charge (12) respectif qui est supporté de manière rotative sur un bras pivotant (14), le bras pivotant (14), pour le déplacement vertical des bras de charge (6a ; 6b), étant disposé de manière à pouvoir pivoter par rapport à la partie d'entraînement (2) sur le bras de charge (6a ; 6b), et les rouleaux de charge (11a ; 11b ; 11c) étant disposés de manière décalée latéralement dans le support de rouleaux de charge (12) et de manière superposée dans la direction longitudinale, le dispositif de rouleaux de charge (9a ; 9b) présentant à chaque fois deux rouleaux de charge (11a ; 11b) et dans chaque support de rouleaux de charge (12) étant disposés deux rouleaux de charge (11a ; 11b), le support de rouleaux de charge (12) étant pourvu d'au moins un contour (20a ; 20b) de forme courbe s'étendant vers le haut, **caractérisé en ce que** le support de rouleaux de charge (12) est pourvu d'au moins un corps de remplissage (22a ; 22b) entourant au moins en partie les rouleaux de charge (11a ; 11b) dans au moins une direction de conduite, lequel corps de remplissage est adapté au contour (20a ; 20b) de forme courbe du support de rouleaux de charge (12), ou le support de rouleaux de charge (12) est pourvu d'au moins un rouleau supplémentaire (25a ; 25b) en forme de cylindre entourant au moins en partie les rouleaux de charge (11a ; 11b) dans au moins une direction de conduite, lequel rouleau supplémentaire, pendant le fonctionnement de conduite normal, n'est pas en contact avec la voie de conduite et est disposé avant le rouleau de charge correspondant (11a ; 11b) au niveau de la région supérieure du support de rouleaux de charge (12).

2. Chariot élévateur selon la revendication 1, **caractérisé en ce que** le contour (20a ; 20b) s'étend depuis une région proche du sol jusqu'à une région éloignée du sol, qui correspond essentiellement à la hauteur des rouleaux de charge (11a ; 11b).

3. Chariot élévateur selon la revendication 1 ou 2, **caractérisé en ce que** le support de rouleaux de charge (12) entoure les rouleaux de charge (11a ; 11b) dans les deux directions de conduite, le support de rouleaux de charge (12) étant pourvu, pour chaque direction de conduite, d'un contour (20a, 20b) de forme courbe respectif s'étendant vers le haut.

4. Chariot élévateur selon l'une quelconque des revendications 1 à 3, **caractérisé en ce qu'**au moins une butée est prévue au niveau du support de rouleaux de charge (12) pour limiter le mouvement de pivotement du support de rouleaux de charge (12) par rapport au bras pivotant (14).

5. Chariot élévateur selon la revendication 4, **caractérisé en ce que** la butée est formée par au moins un tourillon de butée (21a ; 21b) disposé au niveau du support de rouleaux de charge (12), lequel tourillon de butée peut être amené en liaison fonctionnelle avec le bras pivotant (14).

6. Chariot élévateur selon l'une quelconque des revendications 1 à 5, **caractérisé en ce que** le rouleau supplémentaire (25a ; 25b) est supporté de manière rotative dans le support de rouleaux de charge (12) dans la région éloignée du sol avant le rouleau de charge correspondant (11a ; 11b).

7. Chariot élévateur selon la revendication 6, **caractérisé en ce que** le rouleau supplémentaire (25a ; 25b) est disposé à l'extrémité supérieure du contour (20a ; 20b) de forme courbe au niveau du support de rouleaux de charge (12).

8. Chariot élévateur selon la revendication 6 ou 7, **caractérisé en ce qu'**il est prévu un rouleau supplémentaire (25a ; 25b) pour chaque direction de conduite.

9. Chariot élévateur selon l'une quelconque des revendications 1 à 8, **caractérisé en ce que** l'axe de pivotement (15) du support de rouleaux de charge (12) dans le bras pivotant (14) est disposé centralement entre les axes de rotation (13a ; 13b) des rouleaux de charge (11a ; 11b).

10. Chariot élévateur (1), en particulier chariot élévateur à faible levée, comprenant une partie d'entraînement (2) et une partie de charge (3) déplaçable verticalement par rapport à la partie d'entraînement (2), laquelle présente des bras de charge (6a ; 6b) qui sont supportés sur une voie de conduite au moyen d'un dispositif de rouleaux de charge (9a ; 9b) respectif présentant au moins deux rouleaux de charge (11a ; 11b ; 11c), les rouleaux de charge (11a ; 11b ; 11c) étant supportés de manière rotative dans un support de rouleaux de charge (12) respectif qui est supporté de manière rotative sur un bras pivotant (14), le bras pivotant (14), pour le déplacement vertical des bras de charge (6a ; 6b), étant disposé de manière à pouvoir pivoter par rapport à la partie d'entraînement (2) sur le bras de charge (6a ; 6b), et les rouleaux de charge (11a ; 11b ; 11c) étant disposés de manière décalée latéralement dans le support de rouleaux de charge (12) et de manière superposée dans la direction longitudinale, **caractérisé en ce que** le dispositif de rouleaux de charge (9a ; 9b) présente à chaque fois trois rouleaux de charge (11a ; 11b ; 11c), trois rouleaux de charge (11a ; 11b ; 11c) étant disposés sous forme d'étoile dans chaque support de rouleaux de charge (12).

11. Chariot élévateur selon la revendication 10, **caractérisé en ce que** le support de rouleaux de charge (12) est pourvu essentiellement d'un contour de forme triangulaire, les axes de rotation (13a ; 13b ; 13c) des rouleaux de charge (11a ; 11b ; 11c) étant disposés sous forme de triangle équilatéral.

12. Chariot élévateur selon la revendication 11, **caractérisé en ce que** l'axe de rotation (15) du support de rouleaux de charge (12) dans le bras pivotant (14) présente à chaque fois la même distance aux axes de rotation (13a ; 13b ; 13c) des rouleaux de charge (11a ; 11b ; 11c).

13. Chariot élévateur selon l'une quelconque des revendications précédentes, **caractérisé en ce que** les bras de charge (6a ; 6b) sont à chaque fois réalisés de manière ouverte vers le haut dans la région du dispositif de rouleaux de charge (9a ; 9b).
